# EUROPEAN PATENT APPLICATION

(11) **EP 4 557 548 A1**
(43) Date of publication of application: **21.05.2025**
(21) Application number: 24213035.9
(22) Date of filing: 14.11.2024
(51) Int. Cl.: H02J 1/08, B60L 53/00, H02J 7/00, H02J 7/02

(54) **CHARGING DEVICE AND POWER ALLOCATION APPARATUS**

(30) Priority: 15.11.2023 CN 202311527850
(71) Applicant: Huawei Digital Power Technologies Co., Ltd., Shenzhen, Guangdong 518043 (CN)
(72) Inventor: YANG, Yanxing, Shenzhen, 518043 (CN); GUO, Wei, Shenzhen, 518043 (CN); HE, Yuanning, Shenzhen, 518043 (CN); SHENG, Zhigang, Shenzhen, 518043 (CN); CHEN, Yezhen, Shenzhen, 518043 (CN); SONG, Xu, Shenzhen, 518043 (CN)
(74) Representative: Gill Jennings & Every LLP

(57) **Abstract**

Embodiments of this application provide a charging device. The charging device includes m groups of parallel power modules, a plurality of parallel switches, a first switch matrix, a second switch matrix, and a plurality of charging ports. Each group of parallel power modules includes two power modules, and a parallel switch is connected between output ends of the two power modules. The first switch matrix and the second switch matrix each include m input ends and m output ends. Each input end of the first switch matrix is configured to connect to one power module in a corresponding group of parallel power modules. Each input end of the second switch matrix is configured to connect to the other power module in a corresponding group of parallel power modules. The output ends of the first switch matrix and the output ends of the second switch matrix are connected to the charging ports.

## Description

### TECHNICAL FIELD

This application relates to the field of new energy technologies, and in particular, to a charging device and a power allocation apparatus.

### BACKGROUND

As new energy technologies develop rapidly, a market share of electric vehicles increases rapidly. A quantity of charging piles as energy supplement devices of the electric vehicles also increases continuously. Currently, there are many brands and models of electric vehicles in the market. As a result, battery capacities of different electric vehicles are different, and voltages and currents required for charging are also different. To ensure that the vehicles can maximize use of powers of the charging piles during charging, a power allocation technology is indispensable.

### SUMMARY

This application provides a charging device and a power allocation apparatus. According to the charging device, a quantity of power modules connected to each charging port can be flexibly allocated, and a small quantity of switch components is required, so that a size of the charging device can be greatly reduced, and costs can be reduced.

According to a first aspect, an embodiment of this application provides a charging device. The charging device includes m groups of parallel power modules, a plurality of parallel switches, a first switch matrix, a second switch matrix, and a plurality of charging ports, where m is a positive integer and is a multiple of 2. Each group of parallel power modules includes a first power module and a second power module, and a parallel switch is connected between an output end of the first power module and an output end of the second power module. The first switch matrix includes m input ends and m output ends, and the input ends of the first switch matrix are configured to connect to the first power modules in the groups of parallel power modules in a one-to-one correspondence. The second switch matrix includes m input ends and m output ends, and the input ends of the second switch matrix are configured to connect to the second power modules in the groups of parallel power modules in a one-to-one correspondence. The output ends of the first switch matrix and the output ends of the second switch matrix are connected to the charging ports in a one-to-one correspondence. The charging port is configured to connect to a to-be-charged device.

In the disposition manner, when the parallel switch is turned on, the first power module and the second power module in the parallel power module are connected in parallel to output electric energy, and the input end of the first switch matrix or the input end of the second switch matrix may receive a sum of the electric energy output by the first power module and the second power module. Alternatively, when the parallel switch is turned off, the first power module and the second power module in the parallel power module separately output electric energy, the input end of the first switch matrix may receive electric energy output by the first power module, and the input end of the second switch matrix may receive electric energy output by the second power module. In this way, there is no need to separately dispose the parallel switch in the first switch matrix and the second switch matrix, so that at least half of the switches are reduced. In addition, when the parallel switch is turned off, the first switch matrix receives the electric energy output by the first power module, and the second switch matrix receives the electric energy output by the second power module. Therefore, both the input end of the first switch matrix and the input end of the second switch matrix can receive the electric energy output by the power modules, so that each charging port can output electric energy to charge the to-be-charged device. This improves flexibility of allocating electric energy by the charging device, and improves user experience. In addition, a quantity of input ends of the first switch matrix is the same as a quantity of input ends of the second switch matrix, and a quantity of output ends of the first switch matrix is the same as a quantity of output ends of the second switch matrix, so that designs of the switch matrices can be normalized, and assembly complexity of the charging device can be reduced. For example, the first switch matrix and the second switch matrix may be respectively set as two matrices, and quantities of input ends and output ends of the two matrices are the same, so that sizes of the two matrices may be set to be consistent. When the charging device is assembled, an assembly difficulty can be reduced, and space in the charging device can be fully used.

In a possible implementation, m is an integer greater than 2 and is a multiple of 2, the charging device includes a first power unit and a second power unit, the first power unit and the second power unit each include n groups of parallel power modules, and n×2=m. The m input ends of the first switch matrix include n first input ends and n second input ends, the first input ends are connected to first power modules in the first power unit, and the second input ends are connected to first power modules in the second power unit. The m input ends of the first switch matrix are connected to the m output ends of the first switch matrix in a one-to-one correspondence. The first switch matrix includes a first switch assembly, and the n first input ends are connected to the n second input ends in a one-to-one correspondence through the first switch assembly.

In a possible implementation, the m input ends of the second switch matrix include n third input ends and n fourth input ends, the third input ends are connected to second power modules in the first power unit, and the fourth input ends are connected to second power modules in the second power unit. The m input ends of the second switch matrix are connected to the m output ends of the second switch matrix in a one-to-one correspondence. The second switch matrix includes a second switch assembly, and the n third input ends are connected to the n fourth input ends in a one-to-one correspondence through the second switch assembly.

In the disposition manner, a quantity of used switches can be reduced. It is assumed that a rated power of each power module is 60 kW. When the charging device includes the m groups of parallel power modules, a maximum output power of each charging port can be 240 kW by using only 2×m pairs of switches. In a case of same quantities of output ends, if a full-matrix solution is used, 8×m pairs of switches (each output end is connected to four power modules through four pairs of switches) are required to enable a maximum output power of each charging port to be 240 kW. In addition, according to the technical solution provided in this application, m charging ports may be classified into n groups of charging ports, and each group of charging ports is connected to different power modules. In this way, when one of the n groups of charging ports operates, output powers of other groups of charging ports are not affected. Therefore, when a plurality of charging ports all are connected to the to-be-charged device, a possibility that each charging port outputs high-power electric energy is increased, flexibility of outputting a power by the charging port is improved, and user experience is improved.

In a possible implementation, m is an integer greater than 2 and is a multiple of 2, the charging device includes n power units, each power unit includes two groups of parallel power modules, n×2=m, and different power units are connected to different charging ports through the first switch matrix or the second switch matrix. Input ends of the first switch matrix that are connected to each power unit include a first input end and a second input end, and the first input end and the second input end are connected to a same output end of the first switch matrix.

In a possible implementation, the first switch matrix further includes a first switch assembly. The first input end is directly connected to one output end of the first switch matrix, the second input end is connected to the one output end of the first switch matrix through the first switch assembly, the first input end is connected to another output end of the first switch matrix through the first switch assembly, and the second input end is connected to the another output end of the first switch matrix through the first switch assembly.

In a possible implementation, input ends of the second switch matrix that are connected to each power unit include a third input end and a fourth input end, and the third input end and the fourth input end are connected to a same output end of the second switch matrix.

In a possible implementation, the second switch matrix further includes a second switch assembly, the third input end is directly connected to one output end of the second switch matrix, the fourth input end is connected to the one output end of the second switch matrix through the second switch assembly, the third input end is connected to another output end of the second switch matrix through the second switch assembly, and the fourth input end is connected to the another output end of the second switch matrix through the second switch assembly.

In the disposition manner, a quantity of used switches can be reduced. For example, when the charging device includes the m groups of parallel power modules, a maximum output power of each charging port can be 240 kW by using only 3×m pairs of switches. If a full-matrix solution is used, 8×m pairs of switches (each charging port is connected to four power modules through four pairs of switches) are required to enable a maximum output power of each charging port to be 240 kW. In addition, according to the technical solution provided in this application, m charging ports may be classified into n (n×2=m) groups of charging ports, and each group of charging ports is connected to different power modules. In this way, when one of the n groups of charging ports operates, output powers of other groups of charging ports are not affected. Therefore, when a plurality of charging ports all are connected to the to-be-charged device, a possibility that each charging port outputs high-power electric energy is increased, flexibility of outputting a power by the charging port is improved, and user experience is improved.

According to a second aspect, an embodiment of this application provides a power allocation apparatus. The power allocation apparatus includes a plurality of parallel switches, a first switch matrix, and a second switch matrix. Each parallel switch is configured to connect to output ends of two power modules, the first switch matrix includes m input ends and m output ends, each input end of the first switch matrix is configured to connect to one of the two power modules connected to a corresponding parallel switch, and m is a positive integer and is a multiple of 2. The second switch matrix includes m input ends and m output ends. Each input end of the second switch matrix is configured to connect to the other of the power modules connected to a corresponding parallel switch. The output ends of the first switch matrix and the output ends of the second switch matrix are configured to connect to charging ports in a one-to-one correspondence. The charging port is configured to connect to a to-be-charged device.

In a possible implementation, m is an integer greater than 2 and is a multiple of 2, the m input ends of the first switch matrix include n first input ends and n second input ends, and n×2=m. The m input ends of the first switch matrix are connected to the m output ends of the first switch matrix in a one-to-one correspondence. The first switch matrix includes a first switch assembly, and the n first input ends are connected to the n second input ends in a one-to-one correspondence through the first switch assembly.

In a possible implementation, the m input ends of the second switch matrix include n third input ends and n fourth input ends. The m input ends of the second switch matrix are connected to the m output ends of the second switch matrix in a one-to-one correspondence. The second switch matrix includes a second switch assembly, and the n third input ends are connected to the n fourth input ends in a one-to-one correspondence through the second switch assembly.

In a possible disposition manner, m is an integer greater than 2 and is a multiple of 2, the first switch matrix includes a first switch assembly, and every two of the m input ends of the first switch matrix are connected to a same output end of the first switch matrix. One of the every two input ends of the first switch matrix is directly connected to one output end of the first switch matrix, and the other of the every two input ends of the first switch matrix is connected to the one output end of the first switch matrix through the first switch assembly; and the one of the every two input ends of the first switch matrix is connected to another output end of the first switch matrix through the first switch assembly, and the other of the every two input ends of the first switch matrix is directly connected to the another output end of the first switch matrix.

In a possible implementation, the second switch matrix includes a second switch assembly, and every two of the m input ends of the second switch matrix are connected to a same output end of the second switch matrix. One of the every two input ends of the second switch matrix is directly connected to one output end of the second switch matrix, and the other of the every two input ends of the second switch matrix is connected to the one output end of the second switch matrix through the second switch assembly; and the one of the every two input ends of the second switch matrix is connected to another output end of the second switch matrix through the second switch assembly, and the other of the every two input ends of the second switch matrix is directly connected to the another output end of the second switch matrix.

For technical effects brought by the second aspect, refer to the technical effects brought by different designs in the first aspect. Details are not described again.

### BRIEF DESCRIPTION OF DRAWINGS

FIG. 1 is a diagram of a charging pile according to an embodiment of this application;
FIG. 2 is a diagram of a power conversion unit in FIG. 1;
FIG. 3 is another diagram of a power conversion unit in FIG. 1;
FIG. 4 is a connection diagram of a common power allocation apparatus;
FIG. 5 is a diagram of a charging device according to an embodiment of this application;
FIG. 6 is a connection diagram of a first switch matrix and a second switch matrix in FIG. 5;
FIG. 7 is another connection diagram of a first switch matrix and a second switch matrix in FIG. 5;
FIG. 8 is still another connection diagram of a first switch matrix and a second switch matrix in FIG. 5; and
FIG. 9 is yet another connection diagram of a first switch matrix and a second switch matrix in FIG. 5.

### DESCRIPTION OF EMBODIMENTS

For ease of understanding, terms in embodiments of this application are first explained.

Connection should be understood in a broad sense. For example, that A is connected to B may mean that A is directly connected to B or that A is indirectly connected to B through an intermediate medium.

The terms "first", "second", and the like in descriptions are merely intended for a purpose of description, and shall not be understood as an indication or implication of relative importance or implicit indication of a quantity of indicated technical features. Therefore, a feature limited by "first", "second", or the like may explicitly or implicitly include one or more features.

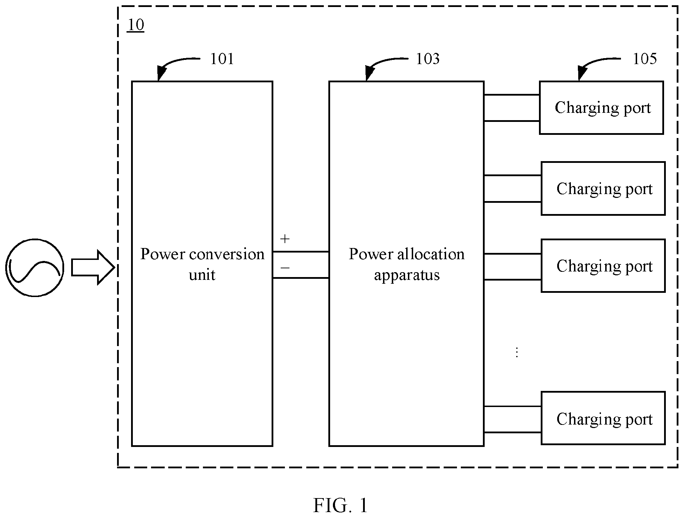

A charging pile serves as an energy supplement apparatus of an electric vehicle, and includes a plurality of power modules. The power module is configured to convert, into a direct current, a current input by an input end of the power module, to provide a charging current for the electric vehicle. FIG. 1 is a diagram of a charging pile according to an embodiment of this application. The charging pile 10 includes a power conversion unit 101, a power allocation apparatus 103, and charging ports 105. An input end of the power conversion unit 101 is configured to receive an alternating current, an output end of the power conversion unit 101 is connected to an input end of the power allocation apparatus 103, an output end of the power allocation apparatus 103 is connected to input ends of the charging ports 105, and output end of the charging ports 105 are configured to output a direct current. The power conversion unit 101 is configured to convert an alternating current into a direct current. The power allocation apparatus 103 is configured to allocate, to the charging ports 105, the direct current output by the power conversion unit 101. The charging ports 105 are configured to connect to an electric vehicle, so that the electric vehicle can be charged.

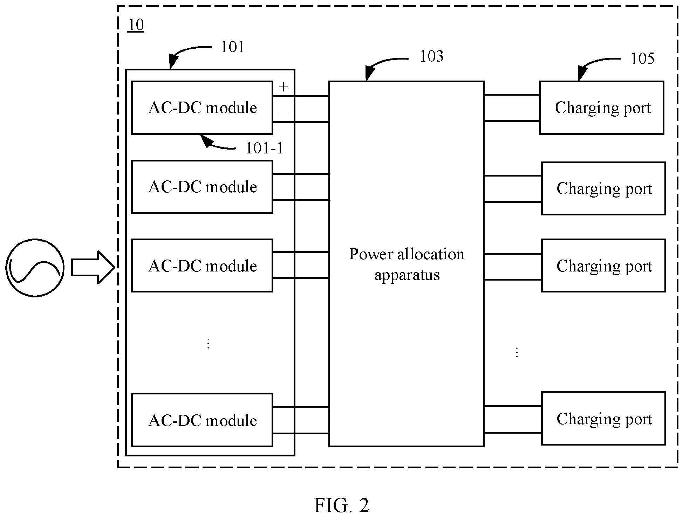

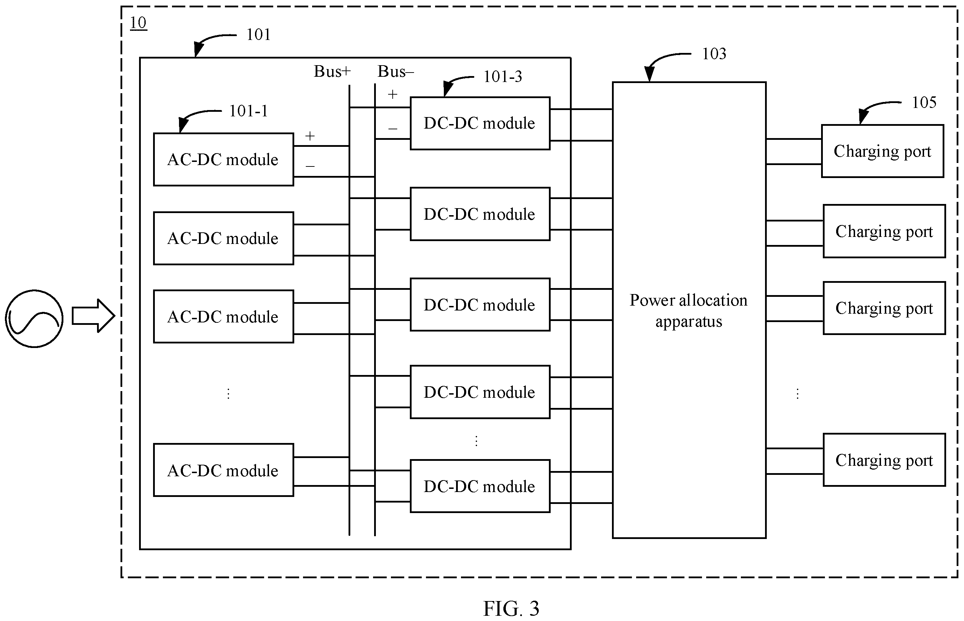

Specifically, FIG. 2 is a diagram of the power conversion unit 101 in FIG. 1. The power conversion unit 101 includes a plurality of AC-DC modules 101-1. Output ends of the plurality of AC-DC modules 101-1 are connected to a plurality of input ends of the power allocation apparatus 103. The power allocation apparatus 103 is configured to allocate, to the charging ports 105, direct currents output by the AC-DC modules 101-1. FIG. 3 is another diagram of the power conversion unit 101 in FIG. 1. The power conversion unit 101 includes a plurality of AC-DC modules 101-1 and a plurality of DC-DC modules 101-3. Output ends of the plurality of AC-DC modules 101-1 are connected to input ends of the plurality of DC-DC modules 101-3 through direct current buses, namely, Bus+ and Bus-, and output ends of the plurality of DC-DC modules 101-3 are connected to a plurality of input ends of the power allocation apparatus 103. The power allocation apparatus 103 is configured to allocate, to the charging ports 105, direct currents output by the DC-DC modules 101-3.

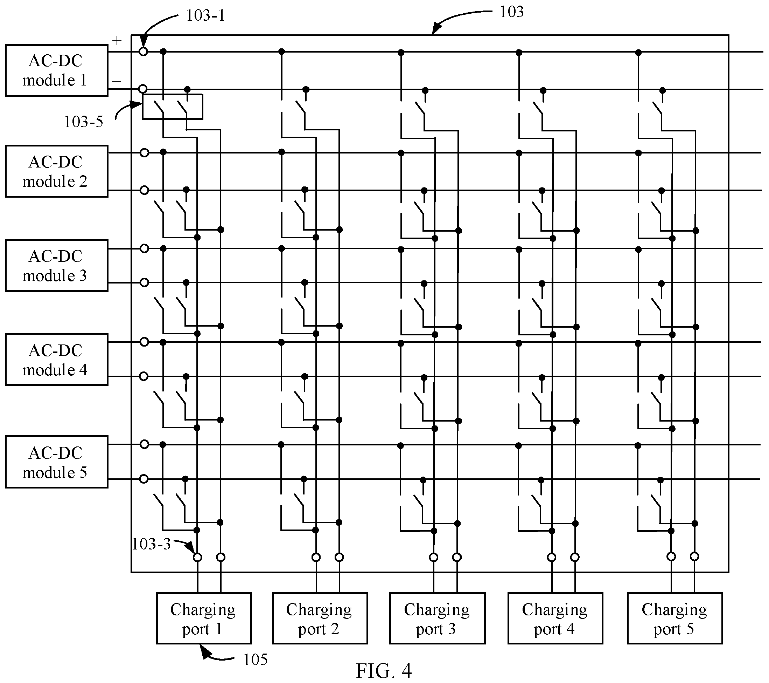

FIG. 4 is a connection diagram of a common power allocation apparatus in FIG. 1. The power allocation apparatus is a full-matrix power allocation apparatus. The power allocation apparatus 103 includes a plurality of input ends 103-1, a plurality of output ends 103-3, and a plurality of switch assemblies 103-5. A switch assembly 103-5 is connected between each input end 103-1 and a corresponding output end 103-3. In the disposition manner, it can be ensured that each power module can be connected to a charging port, so that an output power of each charging port 105 can be flexibly allocated based on a charging requirement of the vehicle. However, in the disposition manner, there are too many switch assemblies 103-5, and a size of the charging pile is large. In the architecture shown in FIG. 4, there are five AC-DC power modules and five charging ports in total, and therefore 25 switch assemblies (50 switch components) are required in total. As a quantity of electric vehicles increases and a maximum rechargeable capability of the vehicle increases, a quantity of power modules and a quantity of charging ports in the charging pile also continuously increase, resulting in an excessively large quantity of switch assemblies. For example, if there are 10 power modules and 10 charging ports in the charging pile, if the full-matrix power allocation apparatus is used, 100 switch assemblies (200 switch components) are required. Consequently, a quantity of switches is excessively large. In this case, a size of the charging pile is large, a process of controlling the switch assemblies by the charging pile is complex, and a charging process is slow, affecting charging experience of a user

In view of this, embodiments of this application provide a charging device and a power allocation apparatus. According to the charging device, a quantity of power modules connected to charging ports can be flexibly scheduled, the quantity of power modules is increased. In addition, a small quantity of switch assemblies are required, and control logic is simple.

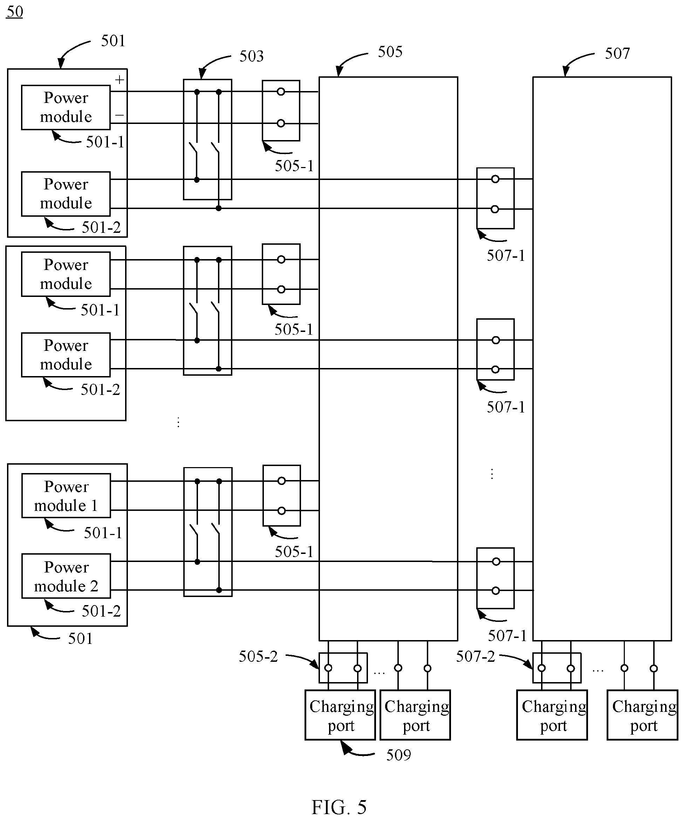

FIG. 5 is a diagram of a charging device according to an embodiment of this application. The charging device 50 includes m groups of parallel power modules 501, a plurality of parallel switches 503, a first switch matrix 505, a second switch matrix 507, and a plurality of charging ports 509, where m is a positive integer and is a multiple of 2. Each group of parallel power modules 501 includes a first power module 501-1 and a second power module 501-2, and a parallel switch 503 is connected between an output end of the first power module 505-1 and an output end of the second power module 505-2. The first switch matrix 505 includes m input ends 505-1 and m output ends 505-2, and the input ends 505-1 of the first switch matrix are configured to connect to the first power modules 501-1 of the groups of parallel power modules 501 in a one-to-one correspondence. The second switch matrix 507 includes m input ends 507-1 and m output ends 507-2, and the input ends 507-1 of the second switch matrix are configured to connect to the second power modules 501-2 of the groups of parallel power modules 501 in a one-to-one correspondence. The output ends 505-2 of the first switch matrix 505 and the output ends 507-2 of the second switch matrix 507 are configured to connect to the charging ports 509 in a one-to-one correspondence, and the charging port 509 is configured to connect to a to-be-charged device.

In the disposition manner, when the parallel switch 503 is turned on, the first power module 501-1 and the second power module 501-2 in the parallel power module 501 are connected in parallel to output electric energy. In this case, the input end 505-1 of the first switch matrix 505 or the input end 507-1 of the second switch matrix 507 may receive a sum of the electric energy output by the first power module 501-1 and the second power module 501-2. Alternatively, when the parallel switch 503 is turned off, the first power module 501-1 and the second power module 501-2 in the parallel power module 501 separately output electric energy, the input end 505-1 of the first switch matrix 505 may receive electric energy output by the first power module 501-1, and the input end 507-1 of the second switch matrix 507 may receive electric energy output by the second power module 501-2. In this way, there is no need to separately dispose the parallel switch 503 in the first switch matrix 505 and the second switch matrix 507, so that at least half of the switches are reduced. In addition, when the parallel switch 503 is turned off, the first switch matrix 505 receives the electric energy output by the first power module 501-1, and the second switch matrix 507 receives the electric energy output by the second power module 501-2. Therefore, both the input end 505-1 of the first switch matrix 505 and the input end 507-1 of the second switch matrix 507 can receive the electric energy output by the power modules, so that each charging port 509 can output electric energy to charge the to-be-charged device. This improves flexibility of allocating electric energy by the charging device 50, and improves user experience. In addition, a quantity of input ends 505-1 of the first switch matrix 505 is the same as a quantity of input ends 507-1 of the second switch matrix 507, and a quantity of output ends 505-2 of the first switch matrix 505 is the same as a quantity of output ends 507-2 of the second switch matrix 507, so that designs of the switch matrices can be normalized, and assembly complexity of the charging device 50 can be reduced. For example, the first switch matrix 505 and the second switch matrix 507 may be respectively set as two matrices, and quantities of input ends and output ends of the two matrices are the same, so that sizes of the two matrices may be set to be consistent. When the charging device 50 is assembled, an assembly difficulty can be reduced, and space in the charging device 50 can be fully used.

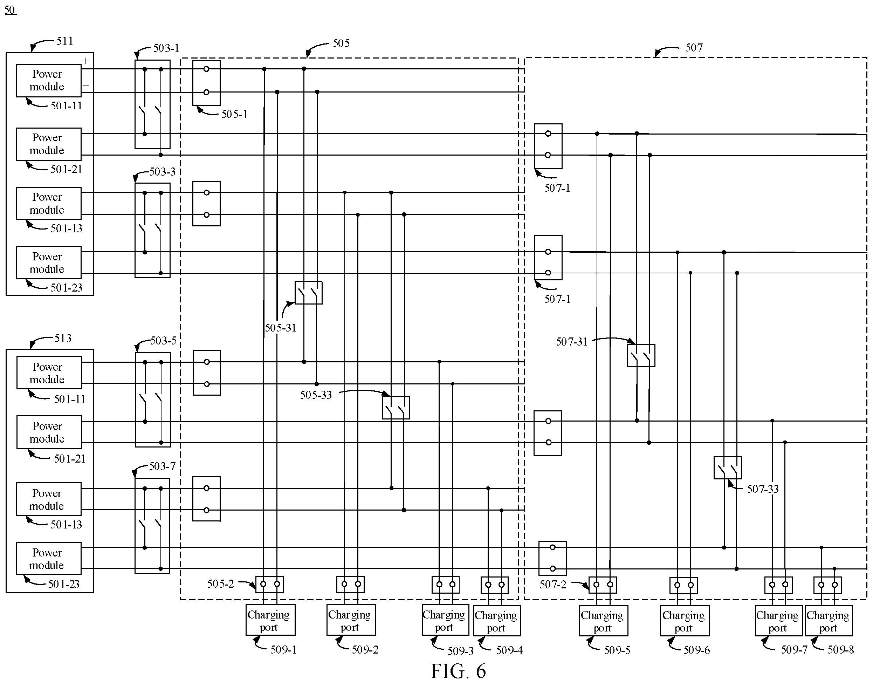

FIG. 6 is a connection diagram of the first switch matrix and the second switch matrix in FIG. 5. For ease of understanding, an example in which the charging device 50 includes four groups of parallel power modules (eight power modules) is used for description. The charging device 50 includes a first power unit 511 and a second power unit 513, and the first power unit 511 and the second power unit 513 each include two groups of parallel power modules. That is, the four groups of parallel power modules are classified into two parts, and each part includes two groups of parallel power modules. The first switch matrix 505 includes two first input ends and two second input ends. The two first input ends are connected to two first power modules 501-11 and 501-13 in the first power unit 511 in a one-to-one correspondence, and the two second input ends are configured to connect to two first power modules 501-11 and 501-13 in the second power unit 513 in a one-to-one correspondence. The four input ends of the first switch matrix 505 are connected to four output ends of the first switch matrix 505 in a one-to-one correspondence. The first switch matrix 505 further includes first switch assemblies 505-31 and 505-33, and the two first input ends are connected to the two second input ends in a one-to-one correspondence through the first switch assemblies 505-31 and 505-33. Similarly, the second switch matrix 507 includes two third input ends and two fourth input ends. The two third input ends are connected to two second power modules 501-21 and 501-23 in the first power unit 511 in a one-to-one correspondence, and the two fourth input ends are connected to two second power modules 501-21 and 501-23 in the second power unit 513 in a one-to-one correspondence. The four input ends of the second switch matrix 507 are connected to four output ends of the second switch matrix 507 in a one-to-one correspondence. The second switch matrix 507 further includes second switch assemblies 507-31 and 507-33, and the two third input ends are connected to the two fourth input ends in a one-to-one correspondence through the second switch assemblies 507-31 and 507-33.

It is assumed that a rated output power of each power module is 60 kW. A charging principle of the charging device 50 is described by using an example in which a charging port 509-1 is connected to the to-be-charged device.
(1) When a charging power required by the to-be-charged device is less than or equal to 60 kW, the first power module 501-11 in the first power unit 511 outputs electric energy to charge the to-be-charged device.
(2) When a charging power required by the to-be-charged device is greater than 60 kW and less than or equal to 120 kW, in a possible implementation, the charging device 50 turns on the switch assembly 505-31, in this case, the first power module 501-11 in the first power unit 511 and the first power module 501-11 in the second power unit 513 jointly output electric energy to charge the to-be-charged device; or in another possible implementation, the charging device 50 turns on the parallel switch 503-1, in this case, the first power module 501-11 in the first power unit 511 and the second power module 501-21 in the first power unit 511 jointly output electric energy to charge the to-be-charged device.
(3) When a charging power required by the to-be-charged device is greater than 120 kW and less than or equal to 180 kW, in a possible implementation, the charging device 50 turns on the switch assembly 505-31 and the parallel switch 503-1, in this case, the first power module 501-11 in the first power unit 511, the second power module 501-21 in the first power unit 511, and the first power module 501-11 in the second power unit 513 jointly output electric energy to charge the to-be-charged device; or in another possible implementation, the charging device 50 turns on the switch assembly 505-31 and the parallel switch 503-5, in this case, the first power module 501-11 in the first power unit 511, the first power module 501-11 in the second power unit 513, and the second power module 501-21 in the second power unit 513 jointly output electric energy to charge the to-be-charged device.
(4) When a charging power required by the to-be-charged device is greater than 180 kW, the charging device 50 turns on the switch assembly 505-31, the parallel switch 503-1, and the parallel switch 503-5, in this case, the first power module 501-11 in the first power unit 511, the second power module 501-21 in the first power unit 511, the first power module 501-11 in the second power unit 513, and the second power module 501-21 in the second power unit 513 jointly output electric energy to charge the to-be-charged device. It should be noted that a maximum power that can be output by the charging port 509-1 is 240 kW. If the charging power required by the to-be-charged device is greater than 240 kW, the charging device 50 and the to-be-charged device may perform communication negotiation with each other, and the charging device 50 outputs electric energy at the maximum power of 240 kW to charge the to-be-charged device.

A charging principle of another charging port is the same as the charging principle of the charging port 509-1, that is, a power interval that can be output by each charging port is [60 kW, 240 kW].

Still as shown in FIG. 6, it can be learned from a connection relationship in the figure that power modules that may be occupied by the charging port 509-1, the charging port 509-3, the charging port 509-5, and the charging port 509-7 during operation are the first power module 501-11 in the first power unit 511, the second power module 501-21 in the first power unit 511, the first power module 501-11 in the second power unit 513, and the second power module 501-21 in the second power unit 513; and power modules that may be occupied by the charging port 509-2, the charging port 509-4, the charging port 509-6, and the charging port 509-8 during operation are the first power module 501-13 in the first power unit 511, the second power module 501-23 in the first power unit 511, the first power module 501-13 in the second power unit 513, and the second power module 501-23 in the second power unit 513. Therefore, the charging port 509-1, the charging port 509-3, the charging port 509-5, and the charging port 509-7 are a group of charging ports; and the charging port 509-2, the charging port 509-4, the charging port 509-6, and the charging port 509-8 are another group of charging ports. In addition, the two groups of charging ports do not affect each other during operation. For example, when the charging port 509-1 outputs electric energy with the power of 60 kW, the charging port 509-2, the charging port 509-4, the charging port 509-6, and the charging port 509-8 each may output electric energy with the power of 240 kW. When the power output by the charging port 509-1 changes to 120 kW, the charging port 509-2, the charging port 509-4, the charging port 509-6, and the charging port 509-8 each may still output electric energy with the power of 240 kW.

In the disposition manner, a quantity of used switches can be reduced. For example, in this embodiment of this application, a maximum output power of each charging port can be 240 kW by using only eight pairs of switches. If a full-matrix solution is used, 32 pairs of switches (each charging port is connected to four power modules through four pairs of switches) are required to enable a maximum output power of each charging port to be 240 kW. In addition, according to the technical solution provided in this application, decoupling between a half quantity of charging ports and the other half quantity of charging ports can be implemented. In other words, when the half quantity of charging ports operate, output powers of the other half quantity of charging ports are not affected. Therefore, when a plurality of charging ports are all connected to the to-be-charged device, a possibility that each charging port outputs high-power electric energy is increased, flexibility of outputting a power by the charging port is improved, and user experience is improved.

It should be noted that, during actual application, the parallel switches of the modules may be disposed in an apparatus in a centralized manner, the first switch matrix 505 is disposed in another apparatus, and the second switch matrix 507 is disposed in still another apparatus; or all switches may be disposed in an apparatus in a centralized manner, and a related device that is directly connected (usually directly connected through a copper bar), for example, the copper bar and the like are disposed in another apparatus. In this embodiment of this application, division into the first switch matrix 505 and the second switch matrix 507 is merely used to facilitate description of an operating principle of the charging device 50, and does not mean that the first switch matrix 505 and the second switch matrix 507 each indicate a physical apparatus.

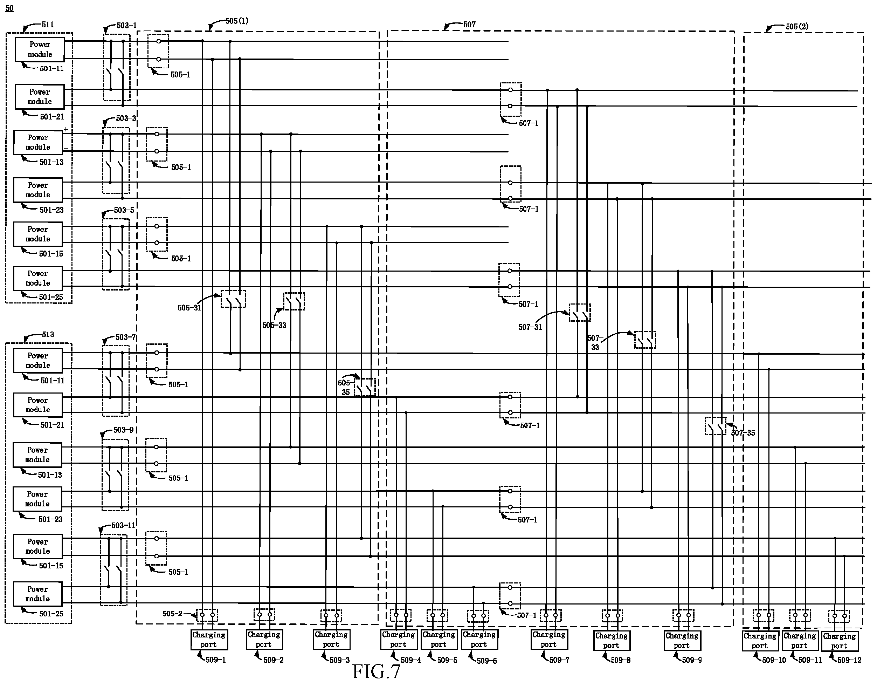

Similarly, FIG. 7 is another connection diagram of the first switch matrix and the second switch matrix in FIG. 5. A difference from FIG. 6 lies in that the charging device 50 includes six groups of parallel power modules. The charging device 50 includes a first power unit 511 and a second power unit 513, and the first power unit 511 and the second power unit 513 each include three groups of parallel power modules. That is, the six groups of parallel power modules are classified into two parts, and each part includes three groups of parallel power modules. The first switch matrix 505 includes three first input ends and three second input ends. The three first input ends are connected to three first power modules 501-11, 501-13, and 501-15 in the first power unit 511 in a one-to-one correspondence, and the three second input ends are connected to three first power modules 501-11, 501-13, and 501-15 in the second power unit 513 in a one-to-one correspondence. The six input ends of the first switch matrix 505 are connected to six output ends of the first switch matrix 505 in a one-to-one correspondence. The first switch matrix 505 further includes first switch assemblies 505-31, 505-33, and 505-35, and the three first input ends are connected to the three second input ends in a one-to-one correspondence through the first switch assemblies 505-31, 505-33, and 505-35. Similarly, the second switch matrix 507 includes three third input ends and three fourth input ends. The three third input ends are connected to three second power modules 501-21, 501-23, and 501-25 in the first power unit 511 in a one-to-one correspondence, and the three fourth input ends are connected to three second power modules 501-21, 501-23, and 501-25 in the second power unit 513 in a one-to-one correspondence. The six input ends of the second switch matrix 507 are connected to six output ends of the second switch matrix 507 in a one-to-one correspondence. The second switch matrix 507 further includes second switch assemblies 507-31, 507-33, and 507-35, and the three third input ends are connected to the three fourth input ends in a one-to-one correspondence through the second switch assemblies 507-31, 507-33, and 507-35.

It should be noted that, as shown in FIG. 7, the first switch matrix 505 includes a matrix 505(1) and a matrix 505(2).

It is assumed that a rated output power of each power module is 60 kW. A charging principle of the charging device 50 is described by using an example in which a charging port 509-7 is connected to the to-be-charged device.
(1) When a charging power required by the to-be-charged device is less than or equal to 60 kW, the second power module 501-21 in the first power unit 511 outputs electric energy to charge the to-be-charged device.
(2) When a charging power required by the to-be-charged device is greater than 60 kW and less than or equal to 120 kW, in a possible implementation, the charging device 50 turns on the switch assembly 507-31, in this case, the second power module 501-21 in the first power unit 511 and the second power module 501-21 in the second power unit 513 jointly output electric energy to charge the to-be-charged device; or in another possible implementation, the charging device 50 turns on the parallel switch 503-1, in this case, the first power module 501-11 in the first power unit 511 and the second power module 501-21 in the first power unit 511 jointly output electric energy to charge the to-be-charged device.
(3) When a charging power required by the to-be-charged device is greater than 120 kW and less than or equal to 180 kW, in a possible implementation, the charging device 50 turns on the switch assembly 507-31 and the parallel switch 503-1, in this case, the first power module 501-11 in the first power unit 511, the second power module 501-21 in the first power unit 511, and the second power module 501-21 in the second power unit 513 jointly output electric energy to charge the to-be-charged device; or in another possible implementation, the charging device 50 turns on the switch assembly 507-31 and the parallel switch 503-7, in this case, the second power module 501-21 in the first power unit 511, the first power module 501-11 in the second power unit 513, and the second power module 501-21 in the second power unit 513 jointly output electric energy to charge the to-be-charged device.
(4) When a charging power required by the to-be-charged device is greater than 180 kW, the charging device 50 turns on the switch assembly 507-31, the parallel switch 503-1, and the parallel switch 503-7, in this case, the first power module 501-11 in the first power unit 511, the second power module 501-21 in the first power unit 511, the first power module 501-11 in the second power unit 513, and the second power module 501-21 in the second power unit 513 jointly output electric energy to charge the to-be-charged device.

It should be noted that a maximum power that can be output by the charging port 509-7 is 240 kW. If the charging power required by the to-be-charged device is greater than 240 kW, the charging device 50 and the to-be-charged device may perform communication negotiation with each other, and the charging device 50 outputs electric energy at the maximum power of 240 kW to charge the to-be-charged device.

A charging principle of another charging port is the same as the charging principle of the charging port 509-7, that is, a power interval that can be output by each charging port is [60 kW, 240 kW].

Still as shown in FIG. 7, it can be learned from a connection relationship in the figure that power modules that may be occupied by the charging port 509-1, the charging port 509-4, the charging port 509-7, and the charging port 509-10 during operation are the first power module 501-11 in the first power unit 511, the second power module 501-21 in the first power unit 511, the first power module 501-11 in the second power unit 513, and the second power module 501-21 in the second power unit 513; power modules that may be occupied by the charging port 509-2, the charging port 509-5, the charging port 509-8, and the charging port 509-11 during operation are the first power module 501-13 in the first power unit 511, the second power module 501-23 in the first power unit 511, the first power module 501-13 in the second power unit 513, and the second power module 501-23 in the second power unit 513; and power modules that may be occupied by the charging port 509-3, the charging port 509-6, the charging port 509-9, and the charging port 509-12 during operation are the first power module 501-15 in the first power unit 511, the second power module 501-25 in the first power unit 511, the first power module 501-15 in the second power unit 513, and the second power module 501-25 in the second power unit 513.

Therefore, the charging port 509-1, the charging port 509-4, the charging port 509-7, and the charging port 509-10 are a group of charging ports; the charging port 509-2, the charging port 509-5, the charging port 509-8, and the charging port 509-11 are another group of charging ports; and the charging port 509-3, the charging port 509-6, the charging port 509-9, and the charging port 509-12 are still another group of charging ports. In addition, the three groups of charging ports do not affect each other during operation.

By analogy, when the charging device 50 includes the m groups of parallel power modules, the first power unit 511 and the second power unit 513 each include n groups of parallel power modules, and n×2=m. The m input ends of the first switch matrix 505 include n first input ends and n second input ends, the n first input ends are connected to n first power modules in the first power unit 511 in a one-to-one correspondence, and the n second input ends are connected to n first power modules in the second power unit 513 in a one-to-one correspondence. The m input ends of the first switch matrix 505 are connected to the m output ends of the first switch matrix 505 in a one-to-one correspondence. The first switch matrix 505 includes first switch assemblies, and the n first input ends are connected to the n second input ends in a one-to-one correspondence through the first switch assemblies. The m input ends of the second switch matrix 507 include n third input ends and n fourth input ends, the n third input ends are connected to n second power modules in the first power unit 511 in a one-to-one correspondence, and the n fourth input ends are connected to n second power modules in the second power unit 513 in a one-to-one correspondence. The m input ends of the second switch matrix 507 are connected to the m output ends of the second switch matrix 507 in a one-to-one correspondence. The second switch matrix 507 includes second switch assemblies, and the n third input ends are connected to the n fourth input ends in a one-to-one correspondence through the second switch assemblies.

In the disposition manner, a quantity of used switches can be reduced. For example, when the charging device 50 includes the m groups of parallel power modules, a maximum output power of each charging port can be 240 kW by using only 2×m pairs of switches. If a full-matrix solution is used, 8×m pairs of switches (each charging port is connected to four power modules through four pairs of switches) are required to enable a maximum output power of each charging port to be 240 kW. In addition, according to the technical solution provided in this application, m charging ports may be classified into n groups of charging ports, and each group of charging ports is connected to different power modules. In this way, when one of the n groups of charging ports operates, output powers of other groups of charging ports are not affected. Therefore, when a plurality of charging ports all are connected to the to-be-charged device, a possibility that each charging port outputs high-power electric energy is increased, flexibility of outputting a power by the charging port is improved, and user experience is improved.

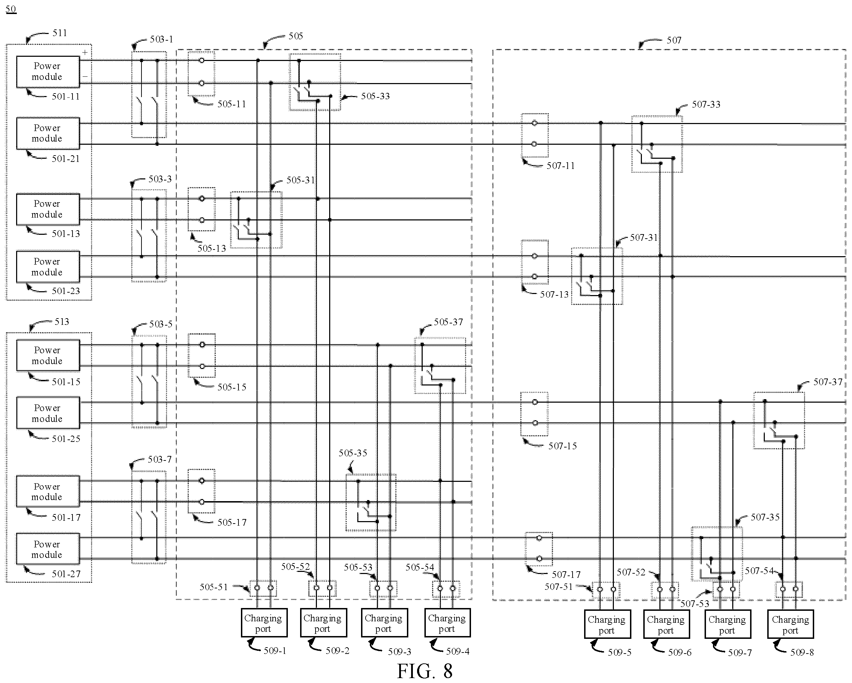

FIG. 8 is still another connection diagram of the first switch matrix and the second switch matrix in FIG. 5. For ease of understanding, an example in which the charging device 50 includes four groups of parallel power modules is used for description. The charging device 50 includes two power units 511 and 513, each power unit includes two groups of parallel power modules, and different power units are connected to different charging ports through the first switch matrix 505 or the second switch matrix 507. Input ends of the first switch matrix that are connected to each power unit include a first input end and a second input end, and the first input end and the second input end are connected to a same output end. For example, input ends of the first switch matrix 505 that are connected to the first power unit 511 include a first input end 505-11 and a second input end 505-13, and the first input end 505-11 and the second input end 505-13 are connected to a same output end 505-51 and a same output end 505-52. Input ends of the first switch matrix 505 that are connected to the second power unit 513 include a first input end 505-15 and a second input end 505-17, and the first input end 505-15 and the second input end 505-17 are connected to a same output end 505-53 and a same output end 505-54.

In a possible implementation, the first input end and the second input end are directly connected to a same output end. In another possible implementation, at least one of the first input end and the second input end is connected to a same output end through a switch assembly.

Specifically, still as shown in FIG. 8, the first switch matrix 505 further includes first switch assemblies 505-31, 505-33, 505-35, and 505-37. The first input end 505-11 connected to the first power unit 511 is directly connected to the output end 505-51, and the second input end 505-13 connected to the first power unit 511 is connected to the output end 505-51 through the switch assembly 505-31. The first input end 505-11 connected to the first power unit 511 is further connected to the output end 505-52 through the switch assembly 505-33, and the second input end 505-13 connected to the first power unit 511 is directly connected to the output end 505-52. The first input end 505-15 connected to the second power unit 513 is directly connected to the output end 505-53, and the second input end 505-17 connected to the second power unit 513 is connected to the output end 505-53 through the switch assembly 505-35. The first input end 505-15 connected to the second power unit 513 is further connected to the output end 505-54 through the switch assembly 505-37, and the second input end 505-17 connected to the second power unit 513 is directly connected to the output end 505-54.

Similarly, input ends of the second switch matrix 507 that are connected to each power unit include a third input end and a fourth input end, and the third input end and the fourth input end are connected to a same output end. Specifically, as shown in FIG. 8, input ends of the second switch matrix 507 that are connected to the first power unit 511 include a third input end 507-11 and a fourth input end 507-13, and the third input end 507-11 and the fourth input end 507-13 are connected to a same output end 507-51 and a same output end 507-52. Input ends of the second switch matrix 507 that are connected to the second power unit 513 include a third input end 507-15 and a fourth input end 507-17, and the third input end 507-15 and the fourth input end 507-17 are connected to a same output end 507-53 and a same output end 507-54.

In a possible implementation, the third input end and the fourth input end are directly connected to a same output end. In another possible implementation, at least one of the third input end and the fourth input end is connected to a same output end through a switch assembly.

Specifically, still as shown in FIG. 8, the second switch matrix 507 further includes second switch assemblies 507-31, 507-33, 507-35, and 507-37. The third input end 507-11 connected to the first power unit 511 is directly connected to the output end 507-51, and the fourth input end 507-13 connected to the first power unit 511 is connected to the output end 507-51 through the switch assembly 507-31. The third input end 507-11 connected to the first power unit 511 is further connected to the output end 507-52 through the switch assembly 507-33, and the fourth input end 507-13 connected to the first power unit 511 is directly connected to the output end 507-52. The third input end 507-15 connected to the second power unit 513 is directly connected to the output end 507-53, and the fourth input end 507-17 connected to the second power unit 513 is connected to the output end 507-53 through the switch assembly 507-35. The third input end 507-15 connected to the second power unit 513 are further connected to the output end 507-54 through the switch assembly 507-37, and the fourth input end 507-17 connected to the second power unit 513 is directly connected to the output end 507-54.

It is assumed that a rated output power of each power module is 60 kW. An operation principle of the charging device 50 is described by using an example in which a charging port 509-1 is connected to the to-be-charged device.
(1) When a charging power required by the to-be-charged device is less than or equal to 60 kW, the first power module 501-11 in the first power unit 511 outputs electric energy to charge the to-be-charged device.
(2) When a charging power required by the to-be-charged device is greater than 60 kW and less than or equal to 120 kW, in a possible implementation, the charging device 50 turns on the switch assembly 505-31, in this case, the first power module 501-11 and the first power module 501-13 in the first power unit 511 jointly output electric energy to charge the to-be-charged device; or in another possible implementation, the charging device 50 turns on the parallel switch 503-1, in this case, the first power module 501-11 in the first power unit 511 and the second power module 501-21 in the first power unit 511 jointly output electric energy to charge the to-be-charged device.
(3) When a charging power required by the to-be-charged device is greater than 120 kW and less than or equal to 180 kW, in a possible implementation, the charging device 50 turns on the switch assembly 505-31 and the parallel switch 503-1, in this case, the first power module 501-11, the first power module 501-13, and the second power module 501-21 in the first power unit 511 jointly output electric energy to charge the to-be-charged device; or in another possible implementation, the charging device 50 turns on the switch assembly 505-31 and the parallel switch 503-3, in this case, the first power module 501-11, the first power module 501-13, and the second power module 501-23 in the first power unit 511 jointly output electric energy to charge the to-be-charged device.
(4) When a charging power required by the to-be-charged device is greater than 180 kW, the charging device 50 turns on the switch assembly 505-31, the parallel switch 503-1, and the parallel switch 503-3, in this case, the first power module 501-11, the first power module 501-13, the second power module 501-21, and the second power module 501-23 in the first power unit 511 jointly output electric energy to charge the to-be-charged device.

It should be noted that a maximum power that can be output by the charging port 509-1 is 240 kW. If the charging power required by the to-be-charged device is greater than 240 kW, the charging device 50 and the to-be-charged device may perform communication negotiation with each other, and the charging device 50 outputs electric energy at the maximum power of 240 kW to charge the to-be-charged device.

A charging principle of another charging port is the same as the charging principle of the charging port 509-1, that is, a power interval that can be output by each charging port is [60 kW, 240 kW].

Still as shown in FIG. 8, it can be learned from a connection relationship in the figure that power modules that may be occupied by the charging port 509-1, the charging port 509-2, the charging port 509-5, and the charging port 509-6 during operation are all power modules in the first power unit 511; and power modules that may be occupied by the charging port 509-3, the charging port 509-4, the charging port 509-7, and the charging port 509-8 during operation are all power modules in the second power unit 513. Therefore, the charging port 509-1, the charging port 509-2, the charging port 509-5, and the charging port 509-6 are a group of charging ports; and the charging port 509-3, the charging port 509-4, the charging port 509-7, and the charging port 509-8 are another group of charging ports. In addition, the two groups of charging ports do not affect each other during operation. For example, when the charging port 509-1 outputs electric energy with the power of 60 kW, the charging port 509-3, the charging port 509-4, the charging port 509-7, and the charging port 509-8 each may output electric energy with the power of 240 kW. When the power output by the charging port 509-1 changes to 120 kW, the charging port 509-3, the charging port 509-4, the charging port 509-7, and the charging port 509-8 each may still output electric energy with the power of 240 kW.

In the disposition manner, a quantity of used switches can be reduced. For example, in this embodiment of this application, a maximum output power of each charging port can be 240 kW by using only 12 pairs of switches. If a full-matrix solution is used, 32 pairs of switches (each charging port is connected to four power modules through four pairs of switches) are required to enable a maximum output power of each charging port to be 240 kW. In addition, according to the technical solution provided in this application, decoupling between a half quantity of charging ports and the other half quantity of charging ports can be implemented. In other words, when the half quantity of charging ports operate, output powers of the other half quantity of charging ports are not affected. Therefore, when a plurality of charging ports are all connected to the to-be-charged device, a possibility that each charging port outputs high-power electric energy is increased, flexibility of outputting a power by the charging port is improved, and user experience is improved.

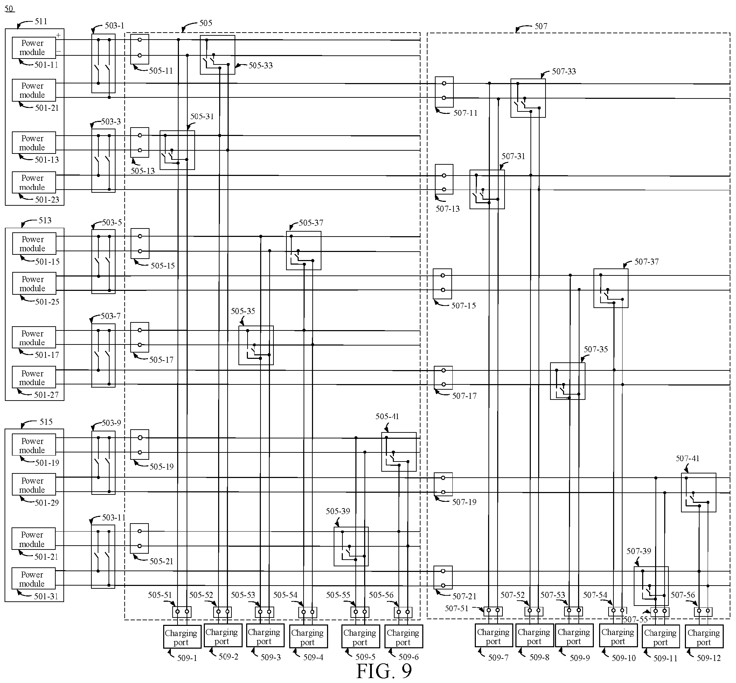

Similarly, FIG. 9 is yet another connection diagram of the first switch matrix and the second switch matrix in FIG. 5. A difference from FIG. 8 lies in that the charging device 50 includes six groups of parallel power modules. The charging device 50 includes three power units 511, 513, and 515, each power unit includes two groups of parallel power modules, and different power units are connected to different charging ports through the first switch matrix 505 or the second switch matrix 507. Input ends of the first switch matrix that are connected to each power unit include a first input end and a second input end, and the first input end and the second input end are connected to a same output end. For example, input ends of the first switch matrix 505 that are connected to the first power unit 511 include a first input end 505-11 and a second input end 505-13, and the first input end 505-11 and the second input end 505-13 are connected to a same output end 505-51 and a same output end 505-52. Input ends of the first switch matrix 505 that are connected to the second power unit 513 include a first input end 505-15 and a second input end 505-17, and the first input end 505-15 and the second input end 505-17 are connected to a same output end 505-53 and a same output end 505-54. Input ends of the first switch matrix 505 that are connected to the third power unit 515 include a first input end 505-19 and a second input end 505-21, and the first input end 505-19 and the second input end 505-21 are connected to a same output end 505-55 and a same output end 505-56.

In a possible implementation, the first input end and the second input end are directly connected to a same output end. In another possible implementation, at least one of the first input end and the second input end is connected to a same output end through a switch assembly.

Specifically, still as shown in FIG. 9, the first switch matrix 505 further includes first switch assemblies 505-31, 505-33, 505-35, 505-37, 505-39, and 505-41. The first input end 505-11 connected to the first power unit 511 is directly connected to the output end 505-51, and the second input end 505-13 connected to the first power unit 511 is connected to the output end 505-51 through the switch assembly 505-31. The first input end 505-11 connected to the first power unit 511 is further connected to the output end 505-52 through the switch assembly 505-33, and the second input end 505-13 connected to the first power unit 511 is directly connected to the output end 505-52. The first input end 505-15 connected to the second power unit 513 is directly connected to the output end 505-53, and the second input end 505-17 connected to the second power unit 513 is connected to the output end 505-53 through the switch assembly 505-35. The first input end 505-15 connected to the second power unit 513 is further connected to the output end 505-54 through the switch assembly 505-37, and the second input end 505-17 connected to the second power unit 513 is directly connected to the output end 505-54. The first input end 505-19 connected to the third power unit 515 is directly connected to the output end 505-55, and the second input end 505-21 connected to the third power unit 515 is connected to the output end 505-55 through the switch assembly 505-39. The first input end 505-19 connected to the third power unit 515 is further connected to the output end 505-56 through the switch assembly 505-41, and the second input end 505-21 connected to the third power unit 515 is directly connected to the output end 505-56.

Similarly, input ends of the second switch matrix 507 that are connected to each power unit include a third input end and a fourth input end, and the third input end and the fourth input end are connected to a same output end. Specifically, as shown in FIG. 9, input ends of the second switch matrix 507 that are connected to the first power unit 511 include a third input end 507-11 and a fourth input end 507-13, and the third input end 507-11 and the fourth input end 507-13 are connected to a same output end 507-51 and a same output end 507-52. Input ends of the second switch matrix 507 that are connected to the second power unit 513 include a third input end 507-15 and a fourth input end 507-17, and the third input end 507-15 and the fourth input end 507-17 are connected to a same output end 507-53 and a same output end 507-54. Input ends of the second switch matrix 507 that are connected to the third power unit 515 include a third input end 507-19 and a fourth input end 507-21, and the third input end 507-19 and the fourth input end 507-21 are connected to a same output end 507-55 and a same output end 507-56.

In a possible implementation, the third input end and the fourth input end are directly connected to a same output end. In another possible implementation, at least one of the third input end and the fourth input end is connected to a same output end through a switch assembly.

Specifically, still as shown in FIG. 9, the second switch matrix 507 further includes second switch assemblies 507-31, 507-33, 507-35, 507-37, 507-39, and 507-41. The third input end 507-11 connected to the first power unit 511 is directly connected to the output end 507-51, and the fourth input end 507-13 connected to the first power unit 511 is connected to the output end 507-51 through the switch assembly 507-31. The third input end 507-11 connected to the first power unit 511 is further connected to the output end 507-52 through the switch assembly 507-33, and the fourth input end 507-13 connected to the first power unit 511 is directly connected to the output end 507-52. The third input end 507-15 connected to the second power unit 513 is directly connected to the output end 507-53, and the fourth input end 507-17 connected to the second power unit 513 is connected to the output end 507-53 through the switch assembly 507-35. The third input end 507-15 connected to the second power unit 513 are further connected to the output end 507-54 through the switch assembly 507-37, and the fourth input end 507-17 connected to the second power unit 513 is directly connected to the output end 507-54. The third input end 507-19 connected to the third power unit 515 is directly connected to the output end 507-55, and the fourth input end 507-21 connected to the third power unit 515 is connected to the output end 507-55 through the switch assembly 507-39. The third input end 507-19 connected to the third power unit 515 is further connected to the output end 507-56 through the switch assembly 507-41, and the fourth input end 507-21 connected to the third power unit 515 is directly connected to the output end 507-56.

An operation principle of the charging device is similar to the operation principle of the charging device in FIG. 8, and details are not described herein again.

Still as shown in FIG. 9, it can be learned from a connection relationship in the figure that power modules that may be occupied by the charging port 509-1, the charging port 509-2, the charging port 509-7, and the charging port 509-8 during operation are all power modules in the first power unit 511; power modules that may be occupied by the charging port 509-3, the charging port 509-4, the charging port 509-9, and the charging port 509-10 during operation are all power modules in the second power unit 513; and power modules that may be occupied by the charging port 509-5, the charging port 509-6, the charging port 509-11, and the charging port 509-12 during operation are all power modules in the third power unit 515. Therefore, the charging port 509-1, the charging port 509-2, the charging port 509-7, and the charging port 509-8 are a group of charging ports; the charging port 509-3, the charging port 509-4, the charging port 509-9, and the charging port 509-10 are another group of charging ports; and the charging port 509-5, the charging port 509-6, the charging port 509-11, and the charging port 509-12 are still another group of charging ports. In addition, the three groups of charging ports do not affect each other during operation. For example, when the charging ports connected to the first power unit 511 output powers, a maximum output power of the charging ports connected to the second power unit 513 and the third power unit 515 is still 240 kW, and is not affected by the output powers of the charging ports connected to the first power unit 511. This implements decoupling between charging ports, and increases a possibility that each charging port outputs high-power electric energy.

In the disposition manner, a quantity of used switches can be reduced. For example, when the charging device 50 includes the m groups of parallel power modules, a maximum output power of each charging port can be 240 kW by using only 3×m pairs of switches. If a full-matrix solution is used, 8×m pairs of switches (each charging port is connected to four power modules through four pairs of switches) are required to enable a maximum output power of each charging port to be 240 kW. In addition, according to the technical solution provided in this application, m charging ports may be classified into n (n×2=m) groups of charging ports, and each group of charging ports is connected to different power modules. In this way, when one of the n groups of charging ports operates, output powers of other groups of charging ports are not affected. Therefore, when a plurality of charging ports all are connected to the to-be-charged device, a possibility that each charging port outputs high-power electric energy is increased, flexibility of outputting a power by the charging port is improved, and user experience is improved.

It should be noted that the switch components in this application include but are not limited to a mechanical switch (for example, a contactor, a relay, or a circuit breaker) and a power electronic switch (for example, an MOSFET or an IGBT), provided that the switch components can be turned on and turned off.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A charging device, wherein the charging device comprises m groups of parallel power modules, a plurality of parallel switches, a first switch matrix, a second switch matrix, and a plurality of charging ports, and m is a positive integer and is a multiple of 2, wherein
each group of parallel power modules comprises a first power module and a second power module, and a parallel switch is connected between an output end of the first power module and an output end of the second power module;
the first switch matrix comprises m input ends and m output ends, and the input ends of the first switch matrix are configured to connect to the first power modules in the groups of parallel power modules in a one-to-one correspondence;
the second switch matrix comprises m input ends and m output ends, and the input ends of the second switch matrix are configured to connect to the second power modules in the groups of parallel power modules in a one-to-one correspondence; and
the output ends of the first switch matrix and the output ends of the second switch matrix are connected to the charging ports in a one-to-one correspondence, and the charging port is configured to connect to a to-be-charged device.

2. The charging device according to claim 1, wherein m is an integer greater than 2 and is a multiple of 2, the charging device comprises a first power unit and a second power unit, the first power unit and the second power unit each comprise n groups of parallel power modules, and n×2=m; and the m input ends of the first switch matrix comprise n first input ends and n second input ends, the first input ends are connected to first power modules in the first power unit, and the second input ends are connected to first power modules in the second power unit, wherein
the m input ends of the first switch matrix are connected to the m output ends of the first switch matrix in a one-to-one correspondence; and
the first switch matrix comprises a first switch assembly, and the n first input ends are connected to the n second input ends in a one-to-one correspondence through the first switch assembly.

3. The charging device according to claim 2, wherein the m input ends of the second switch matrix comprise n third input ends and n fourth input ends, the third input ends are connected to second power modules in the first power unit, and the fourth input ends are connected to second power modules in the second power unit, wherein
the m input ends of the second switch matrix are connected to the m output ends of the second switch matrix in a one-to-one correspondence; and
the second switch matrix comprises a second switch assembly, and the n third input ends are connected to the n fourth input ends in a one-to-one correspondence through the second switch assembly.

4. The charging device according to claim 1, wherein m is an integer greater than 2 and is a multiple of 2, the charging device comprises n power units, each power unit comprises two groups of parallel power modules, n×2=m, and different power units are connected to different charging ports through the first switch matrix or the second switch matrix, wherein
input ends of the first switch matrix that are connected to each power unit comprise a first input end and a second input end, and the first input end and the second input end are connected to a same output end of the first switch matrix.

5. The charging device according to claim 4, wherein the first switch matrix further comprises a first switch assembly, the first input end is directly connected to one output end of the first switch matrix, the second input end is connected to the one output end of the first switch matrix through the first switch assembly, the first input end is connected to another output end of the first switch matrix through the first switch assembly, and the second input end is connected to the another output end of the first switch matrix through the first switch assembly.

6. The charging device according to claim 4 or 5, wherein input ends of the second switch matrix that are connected to each power unit comprise a third input end and a fourth input end, and the third input end and the fourth input end are connected to a same output end of the second switch matrix.

7. The charging device according to claim 6, wherein the second switch matrix further comprises a second switch assembly, the third input end is directly connected to one output end of the second switch matrix, the fourth input end is connected to the one output end of the second switch matrix through the second switch assembly, the third input end is connected to another output end of the second switch matrix through the second switch assembly, and the fourth input end is connected to the another output end of the second switch matrix through the second switch assembly.

8. A power allocation apparatus, wherein the power allocation apparatus comprises a plurality of parallel switches, a first switch matrix, and a second switch matrix, wherein
each parallel switch is configured to connect to output ends of two power modules;
the first switch matrix comprises m input ends and m output ends, each input end of the first switch matrix is configured to connect to one of the two power modules connected to a corresponding parallel switch, wherein m is a positive integer and is a multiple of 2;
the second switch matrix comprises m input ends and m output ends, and each input end of the second switch matrix is configured to connect to the other of the power modules connected to a corresponding parallel switch; and
the output ends of the first switch matrix and the output ends of the second switch matrix are connected to charging ports in a one-to-one correspondence, and the charging port is configured to connect to a to-be-charged device.

9. The power allocation apparatus according to claim 8, wherein m is an integer greater than 2 and is a multiple of 2, the m input ends of the first switch matrix comprise n first input ends and n second input ends, and n×2=m, wherein
the m input ends of the first switch matrix are connected to the m output ends of the first switch matrix in a one-to-one correspondence; and
the first switch matrix comprises a first switch assembly, and the n first input ends are connected to the n second input ends in a one-to-one correspondence through the first switch assembly.

10. The power allocation apparatus according to claim 9, wherein the m input ends of the second switch matrix comprise n third input ends and n fourth input ends, wherein
the m input ends of the second switch matrix are connected to the m output ends of the second switch matrix in a one-to-one correspondence; and
the second switch matrix comprises a second switch assembly, and the n third input ends are connected to the n fourth input ends in a one-to-one correspondence through the second switch assembly.

11. The charging device according to claim 8, wherein m is an integer greater than 2 and is a multiple of 2, the first switch matrix comprises a first switch assembly, and every two of the m input ends of the first switch matrix are connected to a same output end of the first switch matrix, wherein
one of the every two input ends of the first switch matrix is directly connected to one output end of the first switch matrix, and the other of the every two input ends of the first switch matrix is connected to the one output end of the first switch matrix through the first switch assembly; and
the one of the every two input ends of the first switch matrix is connected to another output end of the first switch matrix through the first switch assembly, and the other of the every two input ends of the first switch matrix is directly connected to the another output end of the first switch matrix.

12. The charging device according to claim 11, wherein the second switch matrix comprises a second switch assembly, and every two of the m input ends of the second switch matrix are connected to a same output end of the second switch matrix, wherein
one of the every two input ends of the second switch matrix is directly connected to one output end of the second switch matrix, and the other of the every two input ends of the second switch matrix is connected to the one output end of the second switch matrix through the second switch assembly; and
the one of the every two input ends of the second switch matrix is connected to another output end of the second switch matrix through the second switch assembly, and the other of the every two input ends of the second switch matrix is directly connected to the another output end of the second switch matrix.
